# EUROPEAN PATENT SPECIFICATION

(11) **EP 1 557 578 B1**
(45) Date of publication and mention of the grant of the patent: **28.02.2007**
(21) Application number: 05100283.0
(22) Date of filing: 18.01.2005
(51) Int. Cl.: F16C 35/04, F16C 35/12, G01P 5/06, G01P 13/02, A01K 89/00

(54) **Weatherproof low friction spindle unit**
Wetterfeste Spindel mit geringer Reibung
Palier étanche à faible friction

(30) Priority: 20.01.2004 SE 0400103
(43) Date of publication of application: 27.07.2005
(73) Proprietor: Aktiebolaget SKF, S-415 50 Gothenburg (SE)
(72) Inventor: Östling, Folke, S-412 67 Göteborg (SE); Lavaine, Pierre, S-441 96 Alingsas (SE)

(56) References cited:
- EP-A- 1 228 687
- GB-A- 1 431 678
- US-A- 4 131 245
- PATENT ABSTRACTS OF JAPAN vol. 2003, no. 12, 5 December 2003 (2003-12-05) & JP 2003 302418 A (OGASAWARA KEIKI SEISAKUSHO:KK), 24 October 2003 (2003-10-24)

## Description

The present invention refers to a weatherproof low friction spindle unit intended to be incorporated in rotary systems, requiring high stability and aiming at low friction losses, and particularly in rotary systems operating under conditions where dirt, dust, water or other liquids frequently can splash over the spindle unit.

Such spindle units can for instance be used in hobby articles, toys, measuring instruments and e.g. for fishing reels for supporting the spool thereof in a manner giving a reliable and smooth operation and also being advantageous from noise aspects, etcetera.

Such a spindle unit is disclosed e.g. in SE-C2-518 489. This earlier known spindle unit referred to a precision spindle unit for low friction performance, which incorporated a tubular housing, preferably made of aluminium with an external anodic coating and surrounding a shaft, a first locating rolling bearing mounted on the shaft, a fixed locking washer with a flange, engaging the inner race ring of the first rolling bearing, to arrest this axially against a shoulder on the shaft, a second rolling bearing in the housing having a loose fit on the shaft, a second locking washer fitted to the shaft, a resilient member provided between the second locking washer and the inner race ring of the second bearing, facing outwards, a shoulder projecting inwards inwardly in the housing, against which shoulder the side of the inwardly directed outer race ring of the second rolling bearing is engaging, whereby the second bearing by influence from the resilient member is biased between the resilient member and the first inwardly facing shoulder in the housing, the locking washers to define a slot seal at each axial side of the housing, whereby each one of the first and the second rolling bearings, at their outwardly facing sides are provided with an integral labyrinth seal.

The main purpose of the spindle unit disclosed in that patent was to provide a precision spindle unit having very good running properties, and this was also achieved although the resulting spindle unit was so expensive to manufacture that it could be used only for applications where a very high demand for low friction properties where at hand.

Now therefore the purpose of the present invention is to provide a weatherproof low friction spindle unit having high quality performance, but being substantially less expensive in manufacture, and this has been achieved with a spindle unit which has been given the features defined in the accompanying claim 1.

Hereinafter the invention will be further described with reference to non-limiting embodiments illustrated in the accompanying drawings.

Fig. 1 is a side view showing a spindle unit according to the invention, partly in section.

Fig. 2 is a side view corresponding to Fig. 1 showing the spindle unit according to Fig. 1 in an application for a fishing reel, also shown in cross-section and in simplified form.

Fig. 3 illustrates use of two spindle units according to the invention in an application for a wind measuring instrument, shown without a portion of the outer casing.

Fig. 4 is a schematic view of a part of the wind measuring instrument shown in Fig. 3, in bigger scale and with portions of the instrument casing and the spindle unit housing removed.

Fig. 5 is a perspective view of half a housing for a spindle unit according to the invention.

Fig. 6 illustrates in a planar view and in bigger scale the housing half shown in Fig. 5.

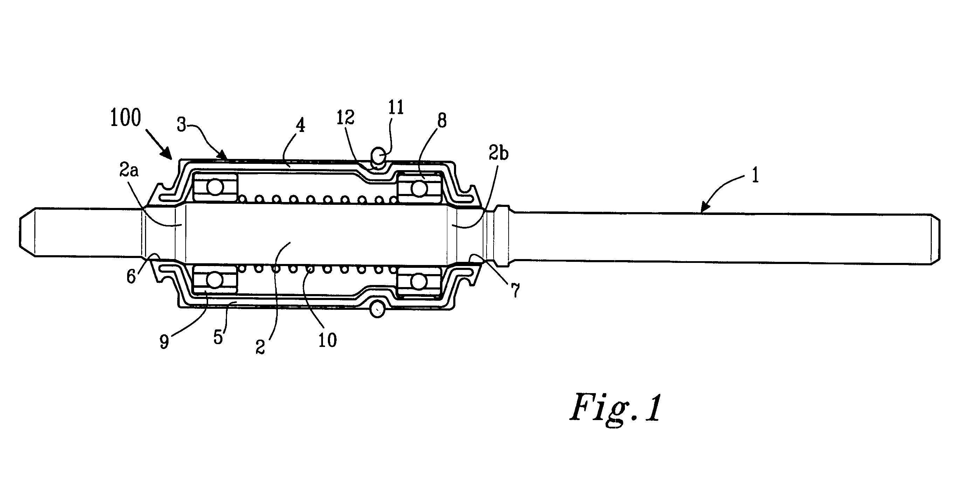

Fig. 1 shows in a side view and partly in section a weatherproof low friction spindle unit 100 according to the present invention. The unit incorporates an elongated shaft 1, having a central portion 2 of bigger diameter provided between the ends of the shaft, and having sloping annular end surfaces 2a, 2b, interconnecting the central portion 2 with the rest of the shaft. A bearing housing 3 is provided to enclose a portion of the shaft 1 thereby also the central portion 2 and the sloping annular end surfaces 2a, 2b.

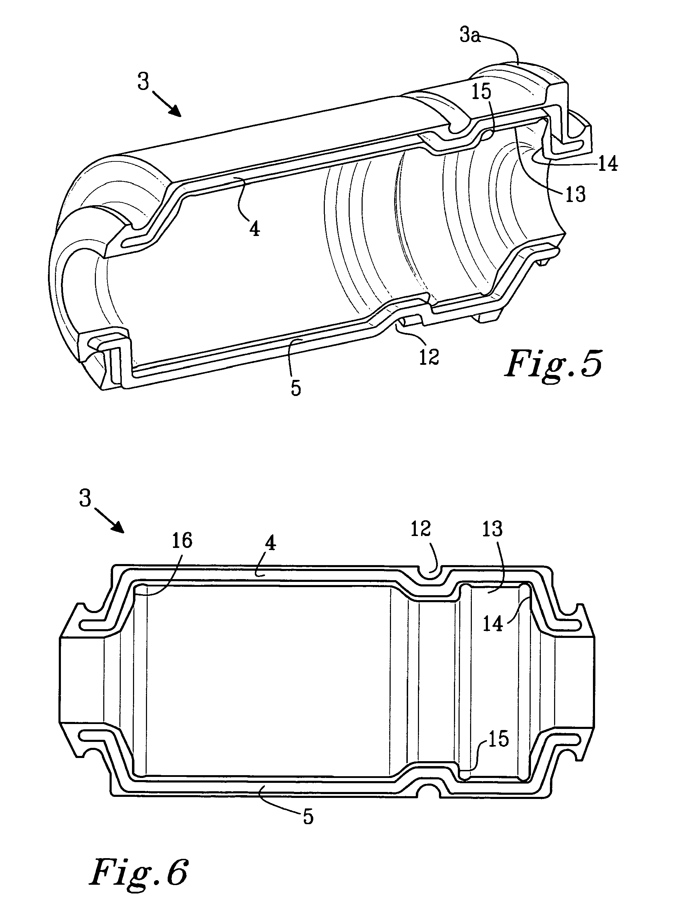

The bearing housing 3 shown is made in two identic halves, only one of which is shown in the drawing, and which is made as a semicircular tubular shell, having means 4, 5 for centering, interconnecting and locking two such bearing housing halves in a substantially water tight manner, and the design of which means is further illustrated in and described in connection to Fig. 5.

Due to the two-part design of the bearing housing 3 it has now become possible to let the bearing housing itself have axial end portions 6, 7 closely adjoining to the sloping end surfaces 2a, 2b of the central portion 2 of the shaft 1 and the shaft surface axially outside the central portion 2. The bearing housing halves furthermore are designed with bearing seats intended to receive a locating bearing 8 and a non-locating bearing 9, which are mounted axially spaced apart on the central portion 2 of the shaft. The non-locating bearing 9 is biased in an axial direction away from the locating bearing 8, by means of a resilient member 10, in the embodiment shown as a spring positioned around the central portion 2 of the shaft and acting between the inner race rings of the two bearings 8, 9.

When assembling this spindle unit 100 a first housing half is first positioned with its opening facing upwards, a shaft 1 with the bearings 8, 9 and the spring 10 positioned on the central portion 2 is thereupon lowered down into the first housing half, whereby it is ascertained that the bearings 8, 9 are positioned in their respective bearing seats. Not shown sealing rings or the like can also be positioned around the shaft, although the very thin slit between the shaft 1 and the inner wall of the bearing housing halves, will form a labyrinth, which in most cases will form a labyrinth seal giving sufficient sealing effect.
When the shaft thus has been positioned in the first bearing housing half 3, the second (not shown) housing half is positioned thereover, with the cooperating interconnecting means 4, 5 of the housing halves engaging each other. The two housing halves are thereupon secured against each other by means of a connecting member 11 or by glue. As the spindle unit in question is generally intended for rather modest loads, and most often is mounted in a housing enclosing and locking the spindle halves, this connecting member can preferably, as illustrated be an elastic O-ring member 11, positioned in a groove 12 formed in the outer envelope surface of the bearing housing halves.

The spindle unit 100 thus designed can be manufactured and delivered to the end user as a closed sealed off unit encapsulated in the bearing housing 3.

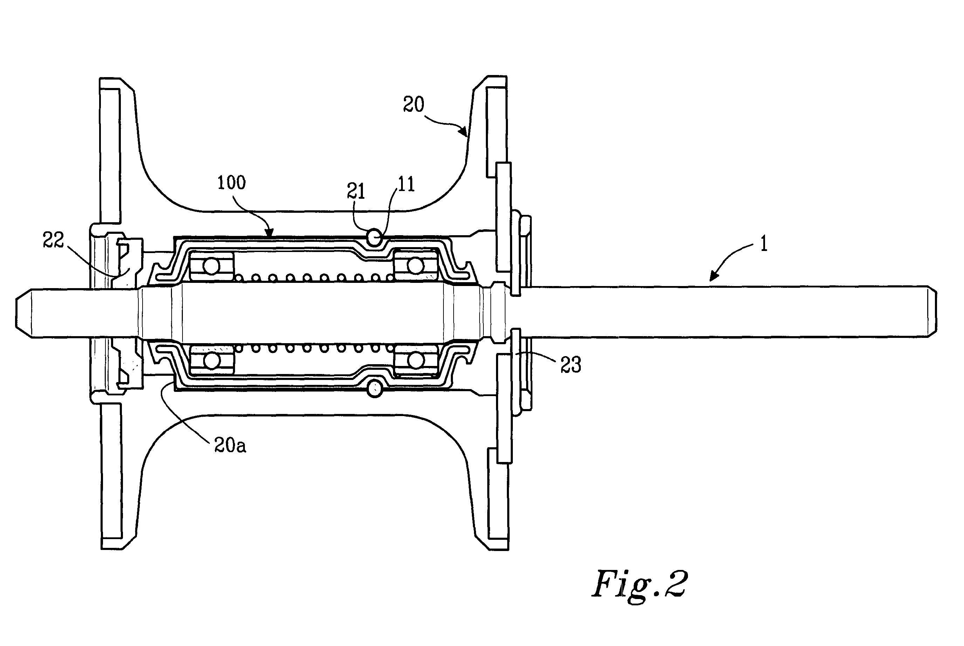

As illustrated in Fig. 2 this spindle unit 100 can be used in a fishing reel 20 shown in cross section, and it can readily be understood that the spindle unit 100 can be inserted from the left hand side in the illustration, axially in the interior of the reel 20, where it can be moved to correct position with aid of the interconnecting means 11 - the O-ring keeping together the housing halves - which can be brought to enter a circumferential groove 21 in the interior of the reel 20. The spindle unit 100 is axially secured in position in the reel 20 between a shoulder 20a in the reel and the O-ring 11. A lid 22 and a locking ring 23 are positioned at opposite axial ends of the reel 20.

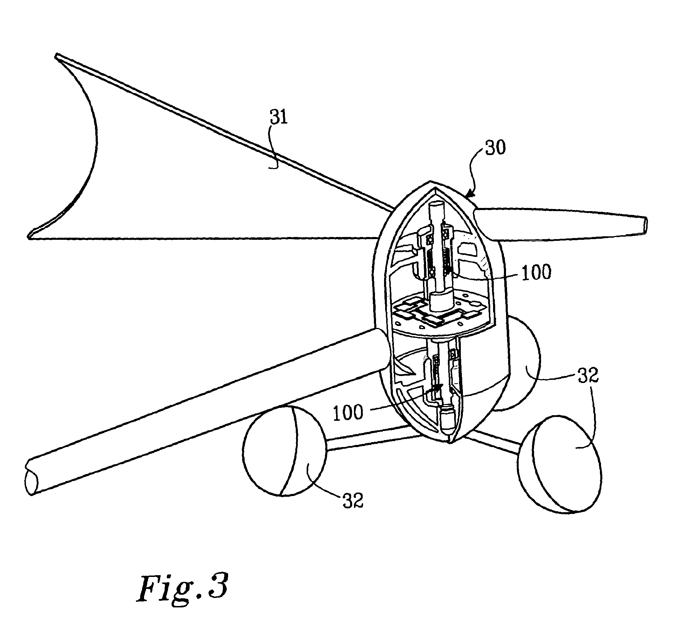

In Fig. 3 is schematically illustrated in perspective another application for the spindle unit 100 according to the invention, where two such spindle units 100 are used in a wind gauge 30, having a tubular housing, which by action of the wind on a wind vane 31 will turn the wind gauge housing 30 to indicate the direction of the wind via a position sensor, associated with one of the spindle units 100. The other spindle unit 100 is associated with a wind impeller 32, which via a speed sensing member associated with the second spindle unit indicates the current wind speed.

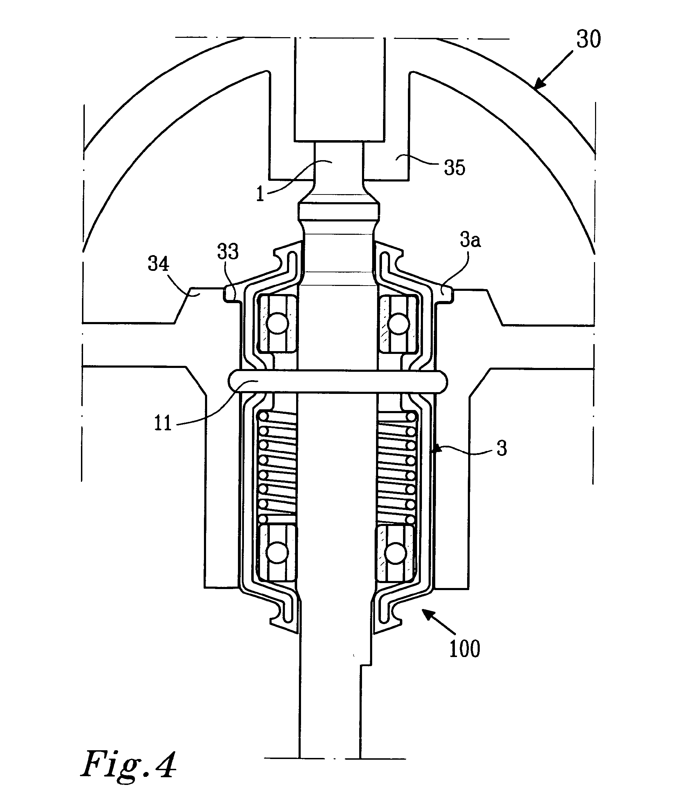

Fig. 4 illustrates in a planar, cross sectional view an upper portion of such a wind gauge application of the spindle unit 100 according to the invention, where a spindle unit of substantially the same design as that shown in Fig. 1 is used. The major difference as compared to the earlier illustrated embodiment, is that the bearing housing 3 at one axial end has an external circumferential bulb 3a, adapted to fit into a corresponding recess 33 in a central hub structure 34 in the wind gauge housing 30, thereby being axially arrested between this recess and the O-ring. The shaft 1 projecting out from the bearing housing 3 is arranged to cooperate with a wind direction indicator 35 arranged in the wind gauge housing 30 for establishing indications representative for the wind direction. A not further shown sensor is positioned within the gauge housing for producing electric signals representative for the or wind speed. These signals can be transferred or transmitted to external processing and/or recording means.

In Fig. 5 is shown in perspective one bearing housing half 3 in accordance with that shown in Fig. 4, i.e. with an external, circumferential bulb 3a adjacent one axial end thereof. Except for this additional bulb, the mainly tubular bearing housing half 3 is similar to that illustrated in Figs. 1 and 2, and the description associated with this figure is valid also for the embodiment without such external bulb.

The shell-formed wall of the housing 3 has at one axial end a portion 13 bordered by wall portions 14, 15 of smaller diameter, thereby forming a seat 13 for the locating bearing 8 (see Fig. 1). In this view it can clearly be seen that one of the longitudinal side edges of the bearing housing half 3 has a groove 4, whereas the opposite side edge has a corresponding, projecting ridge 5, which groove 4 and ridge 5 function as the cooperating means 4, 5 interconnecting the bearing housing halves 3 in a manner ascertaining that the halves are centered and preventing passage of dirt, dust or moisture therethrough.

Fig. 6 shows in a planar view the bearing housing half 3 illustrated in Fig. 1, although the only difference compared to the housing half illustrated in Fig. 5 is that the housing half 3 in this embodiment has no external circumferential bulb.

As can be seen the groove 4 and the ridge 5, follow the somewhat windling contour of the housing side edges, thereby being offset from a linear direction and for this reason it is ascertained that the two parts of the bearing housing 3 will be positioned in exactly correct mutual positions when they are put together. The form of the groove 4 and ridge 5 being complementary to each other also secures a tight joint between the housing halves, whereby the risk for leakage of dirt, dust and moisture into the spindle unit 100 is substantially eliminated.

Fig. 6 illustrates the restriction of the bearing seat 13 for the locating bearing 8 (Fig. 1) by the depending wall portions 14 and 15 of the housing wall, and the other, non-locating bearing 9 (Fig. 1) will engage a depending wall portion 16 of the bearing housing at the opposite axial end thereof, thereby being urged against this wall portion under influence of the resilient force exerted by the spring member 10 (Fig. 1).

The actual design of the outer envelope surface of the bearing housing of course is to be adapted to the purpose for which the spindle unit is intended. In the embodiments illustrated and described the different embodiments of spindle unit 100 are substantially similar, but it is evident that exterior of the spindle unit can be altered to be appropriate for different applications.

The bearing housing halves 3 are preferably manufactured from appropriate plastic materials, preferably by injection moulding, although other appropriate manufacturing techniques are also possible.

Although the different applications of the invention has been shown with deep groove ball bearings, it is of course evident that other types of bearings can be used.

Although the means for interconnecting the bearing housing halves have been shown and described as a groove and tongue joint, it is also possible that the centering and locking of the bearing housing halves can be produced with pins and corresponding bores, although the weather-proof performance will probably be somewhat lower with such a solution.

## Claims

1. A weatherproof low friction spindle unit. (100), incorporating in combination:
an elongated shaft (1, 2),
a tubular housing (3) surrounding the shaft and having a bigger inner diameter than the diameter of the shaft (1, 2),
in the interior of the housing a locating rolling bearing (8) mounted on the shaft and a non-locating rolling bearing (9) provided in the interior of the housing (3) on the shaft,
whereby the first and second bearings (8, 9) are spaced apart along the shaft,
**characterized** therein,
that the bearing housing is made as two identic halves (3), each of which forming a semi-tubular shell-formed member, having radii of varying size in the longitudinal direction thereof, with end portions (14, 16) closely adjoining to the shaft (1), and each being provided with means (4, 5) adapted to interconnect the two bearing housing halves in a centered and substantially weatherproof manner.

2. A weatherproof spindle unit (100) as claimed in claim 1,
**characterized** therein,
that the locating bearing (8) is held in position in the housing (3) in a bearing seat (13) formed between two depending wall portions (14, 15) in the interior of the housing (3).

3. A weatherproof spindle unit (100) as claimed in claim 2,
**characterized** therein,
that the non-locating bearing (9) is arranged against a further depending wall portion (16) in the bearing housing (3) opposed to the bearing seat (13) for the locating bearing, and that a resilient means (10) is provided for biasing the non-locating bearing (9) against said further depending wall portion (16).

4. A weatherproof spindle unit (100) as claimed in anyone of claims 1-3,
**characterized** therein,
that each one of the two identic halves (3) of the bearing housing has longitudinal side edges, one of which is provided with a groove (4) extending along the contour of the bearing housing half, whereas the opposite longitudinal side edge has a projecting ridge (5) extending along the contour of the bearing housing half, said groove (4) and ridge (5) being complementary to each other, and forming the means (4, 5) adapted to interconnect the two bearing housing halves in a tight joint, when the bearing housing halves are positioned to enclose the shaft (1, 2) and the bearings (8, 9).

5. A weatherproof spindle unit (100) as claimed in anyone of claims 1-4,
**characterized** therein,
that the two bearing housing halves (3) of the spindle unit (100) in their assembled state are held together by at least one resilient connecting member (11) positioned in an associated groove (12) in the outer envelope surface of the bearing housing halves (3).

6. A weatherproof spindle unit (100) as claimed in anyone of the preceeding claims,
**characterized** therein,
that the two bearing housing halves (3) are injection moulded plastic material members.

7. A weatherproof spindle unit (100) as claimed in anyone of the preceeding claims,
**characterized** therein,
that the shaft (1) has a central portion (2) of slightly bigger diameter than the rest of the shaft (1), with two annular sloping end faces (2a, 2b) spaced apart from each other and positioned adjacent the depending end portions (14, 16) of the bearing housing (3) and forming with the shaft surface there outside labyrinth-shaped sealing arrangements.

8. A fishing reel (20),
**characterized** therein,
that it incorporates a spindle unit (100) as claimed in anyone of the preceding claims, and which spindle unit (100) is positioned in the interior of the fishing reel by means of a resilient locking member (11) received in grooves (12, 21) in the exterior of the spindle unit (100) and the interior of the fishing reel (20).

9. A wind gauge (30),
**characterized** therein,
that it incorporates at least one spindle unit (100) as claimed in anyone of the preceding claims, and which spindle unit is arranged to cooperate with sensor means and/or (35) a wind direction indicator for establishing wind direction and/or wind speed.

## Patentansprüche

1. Wetterfeste Spindeleinheit (100) mit geringer Reibung, die in Kombination eine längliche Spindel (1, 2), ein rohrförmiges Gehäuse (3), das die Spindel umgibt und dessen Innendurchmesser größer als der Durchmesser der Spindel (1, 2) ist, ein im Inneren des Gehäuses auf der Spindel angebrachtes Fest-Wälzlager (8) und ein im Inneren des Gehäuses (3) auf der Spindel vorgesehenes Los-Wälzlager (9) aufweist, wobei das erste und das zweite Lager (8, 9) entlang der Spindel beabstandet zueinander angeordnet sind, **dadurch gekennzeichnet, dass** das Lagergehäuse aus zwei identischen Hälften (3) besteht, die jeweils ein halbrohrförmiges, als Schale ausgebildetes Element bilden, das in seiner Längsrichtung Radien unterschiedlicher Größe aufweist und mit Endbereichen (14, 16) dicht an die Spindel (1) angrenzt, und die jeweils mit Mitteln (4, 5) versehen sind, die geeignet sind, die beiden Lagergehäusehälften in einer zentrierten und im wesentlichen wetterfesten Weise zu verbinden.

2. Wetterfeste Spindeleinheit (100) nach Anspruch 1, **dadurch gekennzeichnet, dass** das Festlager (8) in dem Gehäuse (3) in einem zwischen zwei eingezogenen Wandbereichen (14, 15) in dem Inneren des Gehäuses (3) ausgebildeten Lagersitz (13) in Position gehalten wird.

3. Wetterfeste Spindeleinheit (100) nach Anspruch 2, **dadurch gekennzeichnet, dass** das Loslager (9) in dem Lagergehäuse (3) an einem weiteren eingezogenen Wandbereich (16) gegenüber dem Lagersitz (13) für das Festlager anliegt und ein federndes Element (10) zum Vorspannen des Loslagers (9) gegen den weiteren eingezogenen Wandbereich (16) vorgesehen ist.

4. Wetterfeste Spindeleinheit (100) nach einem der Ansprüche 1 bis 3, **dadurch gekennzeichnet, dass** jede der zwei identischen Hälften (3) des Lagergehäuses längs verlaufende Seitenkanten hat, von denen eine mit einer Nut (4) versehen ist, die sich entlang der Kontur der Lagergehäusehälfte erstreckt, und die gegenüberliegende längs verlaufende Seitenkante eine hervorstehende, sich entlang der Kontur der Lagergehäusehälfte erstreckende Rippe (5) besitzt, wobei die Nut (4) und die Rippe (5) zueinander passen und die Mittel (4, 5) bilden, die geeignet sind, die zwei Lagergehäusehälften in einer dichten Schließstelle miteinander zu verbinden, wenn die Lagergehäusehälften so angeordnet sind, dass sie die Spindel (1, 2) und die Lager (8, 9) umschließen.

5. Wetterfeste Spindeleinheit (100) nach einem der Ansprüche 1 bis 4, **dadurch gekennzeichnet, dass** die zwei Lagergehäusehälften (3) der Spindeleinheit (100) in ihrem montierten Zustand mit Hilfe mindestens eines elastischen Verbindungselements (11) zusammengehalten werden, das in einer zugehörigen Nut (12) in der äußeren Hüllfläche der Lagergehäusehälften (3) angeordnet ist.

6. Wetterfeste Spindeleinheit (100) nach einem der vorhergehenden Ansprüche, **dadurch gekennzeichnet, dass** die zwei Lagergehäusehälften (3) aus Spritzgußteilen aus Kunststoffmaterial bestehen.

7. Wetterfeste Spindeleinheit (100) nach einem der vorhergehenden Ansprüche, **dadurch gekennzeichnet, dass** die Spindel (1) einen mittleren Bereich (2) mit geringfügig grö-ßerem Durchmesser als die übrige Spindel (1) aufweist, der zwei ringförmige geneigte Stirnseiten (2a, 2b) besitzt, die voneinander beabstandet sowie in der Nähe der eingezogenen Endbereichen (14, 16) der Lagergehäuse (3) angeordnet sind und mit der dortigen äußeren Spindelfläche labyrinthförmige Dichtungsvorrichtungen bilden.

8. Angelspule (20), **dadurch gekennzeichnet, dass** sie eine Spindeleinheit (100) nach einem der vorhergehenden Ansprüche aufweist, wobei die Spindeleinheit (100) in dem Inneren der Angelspule mit Hilfe eines elastischen Halteelements (11) angeordnet ist, das in Nuten (12, 21) in der Außenseite der Spindeleinheit (100) und in der Innenseite der Angelspule (20) aufgenommen ist.

9. Windmesser (30), **dadurch gekennzeichnet, dass** er mindestens eine Spindeleinheit (100) nach einem der vorhergehenden Ansprüche aufweist, die vorgesehen ist, um zur Ermittlung der Windrichtung und/oder der Windgeschwindigkeit mit Sensormitteln und/oder einem Windrichtungsanzeiger (35) zusammenzuwirken.

## Revendications

1. Unité d'arbre rotatif à faible frottement à l'épreuve des intempéries (100), incorporant en combinaison :
un arbre allongé (1, 2),
un boîtier tubulaire (3) entourant l'arbre et ayant un diamètre intérieur supérieur au diamètre de l'arbre (1, 2),
dans l'intérieur du boîtier, un palier de roulement de positionnement (8) monté sur l'arbre et un palier de roulement de non-positionnement (9) disposé à l'intérieur du boîtier (3) sur l'arbre,
grâce à quoi les premier et deuxième paliers (8, 9) sont espacés l'un de l'autre le long de l'arbre,
**caractérisée en ce que** :
le boîtier de palier est réalisé avec deux moitiés identiques (3), chacune d'entre elles constituant un élément en forme de coque semi-tubulaire, ayant des rayons de taille variable dans la direction longitudinale de celles-ci, avec des parties d'extrémité (14, 16) rejoignant étroitement l'arbre (1) et étant chacune munie de moyens (4, 5) adaptés pour interconnecter les deux moitiés de boîtier de palier d'une façon centrée et sensiblement à l'épreuve des intempéries.

2. Unité d'arbre rotatif à l'épreuve des intempéries (100) selon la revendication 1,
**caractérisée en ce que** :
le palier de positionnement (8) est maintenu en position dans le boîtier (3) dans un siège de palier (13) formé entre deux parties de paroi pendantes (14, 15) à l'intérieur du boîtier (3).

3. Unité d'arbre rotatif à l'épreuve des intempéries (100) selon la revendication 2,
**caractérisée en ce que** :
le palier de non-positionnement (9) est agencé contre une autre partie de paroi pendante (16) dans le boîtier de palier (3) opposée au siège de palier (13) pour le palier de positionnement, et **en ce que** des moyens élastiques (10) sont disposés pour solliciter le palier de non-positionnement (9) contre ladite autre partie de paroi pendante (16).

4. Unité d'arbre rotatif à l'épreuve des intempéries (100) selon l'une quelconque des revendications 1 à 3,
**caractérisée en ce que** :
chacune des deux moitiés identiques (3) du boîtier de palier comporte des bords latéraux longitudinaux, l'un d'entre eux étant muni d'une rainure (4) s'étendant le long du contour de la moitié de boîtier de palier, tandis que le bord latéral longitudinal opposé comporte une nervure saillante (5) s'étendant le long du contour de la moitié de boîtier de palier, ladite rainure (4) et ladite nervure (5) étant complémentaires l'une à l'autre, et constituant les moyens (4, 5) adaptés pour interconnecter les deux moitiés de boîtier de palier en un joint étanche, lorsque les moitiés de boîtier de palier sont positionnées de façon à renfermer l'arbre (1, 2) et les paliers (8, 9).

5. Unité d'arbre rotatif à l'épreuve des intempéries (100) selon l'une quelconque des revendications 1 à 4,
**caractérisée en ce que** :
les deux moitiés de boîtier de palier (3) de l'unité d'arbre rotatif (100), dans leur état assemblé, sont maintenues ensemble par au moins un élément de raccordement élastique (11) positionné dans une rainure associée (12) dans la surface d'enveloppe extérieure des moitiés de boîtier de palier (3).

6. Unité d'arbre rotatif à l'épreuve des intempéries (100) selon l'une quelconque des revendications précédentes,
**caractérisée en ce que** :
les deux moitiés de boîtier de palier (3) sont des éléments en matière plastique moulés par injection.

7. Unité d'arbre rotatif à l'épreuve des intempéries (100) selon l'une quelconque des revendications précédentes,
**caractérisée en ce que** :
l'arbre (1) comporte une partie centrale (2) ayant un diamètre légèrement supérieur à celui du reste de l'arbre (1), avec deux faces d'extrémité en pente annulaires (2a, 2b) espacées l'une de l'autre et positionnées au voisinage des parties d'extrémité pendantes (14, 16) du boîtier de palier (3) et formant avec la surface d'arbre extérieure des configurations de joint en forme de labyrinthe.

8. Moulinet de pèche (20),
**caractérisé en ce que** :
il incorpore une unité d'arbre rotatif (100) selon l'une quelconque des revendications précédentes, et **en ce que** cette unité d'arbre rotatif (100) est positionnée à l'intérieur du moulinet de pèche à l'aide d'un élément de blocage élastique (11) reçu dans des rainures (12, 21) à l'extérieur de l'unité d'arbre rotatif (100) et à l'intérieur du moulinet de pèche (20).

9. Anémomètre (30),
**caractérisé en ce que** :
il incorpore au moins une unité d'arbre rotatif (100) selon l'une quelconque des revendications précédentes, et **en ce que** cette unité d'arbre rotatif est agencée de façon à coopérer avec des moyens formant capteur et/ou (35) un indicateur de direction de vent pour établir la direction du vent et/ou la vitesse du vent.
